# EUROPEAN PATENT SPECIFICATION

(11) **EP 3 543 578 B1**
(45) Date of publication and mention of the grant of the patent: **24.02.2021**
(21) Application number: 16921872.4
(22) Date of filing: 21.11.2016
(51) Int. Cl.: F16L 25/00, F16L 25/10, F16L 37/091, F16L 37/084, F16L 37/092

(54) **COMPOSITE ANCHORING BODY, PIPELINE CONNECTION DEVICE USING ANCHORING BODY, AND METHOD FOR INSTALLING SAME**
ZUSAMMENGESETZTER VERANKERUNGSKÖRPER, ROHRLEITUNGSVERBINDUNGSVORRICHTUNG MIT VERWENDUNG DES VERANKERUNGSKÖRPERS UND VERFAHREN ZUR INSTALLATION DAVON
CORPS D'ANCRAGE COMPOSITE, DISPOSITIF DE RACCORDEMENT DE CONDUITE UTILISANT LE CORPS D'ANCRAGE ET PROCÉDÉ D'INSTALLATION ASSOCIÉ

(43) Date of publication of application: 25.09.2019
(73) Proprietor: Xinxing Ductile Iron Pipes Co., Ltd, Wuan, Hebei 056300 (CN)
(72) Inventor: LI, Chengzhang, Wuan, Hebei 056300 (CN); LI, Jun, Wuan, Hebei 056300 (CN); SHEN, Yong, Wuan, Hebei 056300 (CN); XU, Jun, Wuan, Hebei 056300 (CN); ZHANG, Tao, Wuan, Hebei 056300 (CN); WANG, Song, Wuan, Hebei 056300 (CN); ZUO, Chao, Wuan, Hebei 056300 (CN); ZHU, Pan, Wuan, Hebei 056300 (CN); CHE, Lei, Wuan, Hebei 056300 (CN)
(74) Representative: Gulde & Partner
(86) International application number: PCT/CN2016/106626
(87) International publication number: WO 2018/090377

(56) References cited:
- EP-A1- 0 790 456
- CN-A- 104 797 873
- CN-A- 105 240 633
- CN-A- 105 240 633
- CN-A- 106 322 027
- CN-B- 102 297 297
- CN-U- 206 234 526
- DE-C1- 19 542 118
- US-A- 5 269 569
- US-A1- 2010 194 104

## Description

### Field of the Invention

The invention relates to a pipeline joint, in particular to a composite anchoring body used in the pipeline joint, a pipeline connection device using the anchoring body and a method for installing the same.

### Background of the Invention

In order to connect stably, a traditional pipeline joint provides a self-anchoring structure in the joint. The pipeline joint with the self-anchoring structure has simple structure, convenient installation and broad application in the fields of municipal engineering, oil transferring, gas transferring and the like.

There are two main types of joints, one is that with a self-anchoring ring structure, and the other is that without a self-anchoring ring structure. The self-anchoring ring structure can achieve the purpose of self-anchoring of the joint by providing a raised self-anchoring ring in a spigot, providing a stopper ring in a socket, and restricting the raised self-anchoring ring to the socket by the stopper ring after the spigot is inserted into the socket, such as the structure disclosed in the Chinese patent No. CN102297297A, titled "an inserting type pipe connector with an anchoring structure". The disadvantages of this kind of restricted joints are that the structure is relatively complex, the cost is higher than that of an ordinary pipe, the self-anchoring ring cannot be manufactured on site because it is usually formed by surfacing at the spigot and the process is relatively complex, and the construction is inconvenient when the pipeline design changes, which often causes delay in construction because the pipe cannot be cut during installation on site. The structure without the self-anchoring ring adopts other structures to ensure self-anchoring. For example, an improved self-anchoring joint for steel teeth disclosed in the CN Patent No. CN1103149A, wherein the steel teeth and the elastic body are also separated from the sealing rubber ring, a part of the self-anchoring mechanism is outside the self-anchoring chamber in operation, and clamped on the end face of the socket by a part of the elastic element, so that tension force is provided to compress the steel teeth on the outer wall of the pipeline. Compared with the self-anchoring ring structure, the structure is relatively simple and does not need surfacing the self-anchoring ring, and the process is greatly simplified. However, the tension of the steel teeth is easily affected by external factors, resulting in unstable self-anchoring performance, moreover, the self-anchoring structure is a complete ring, the mould is large, manufacturing cost is high and it is not easy to manufacture.

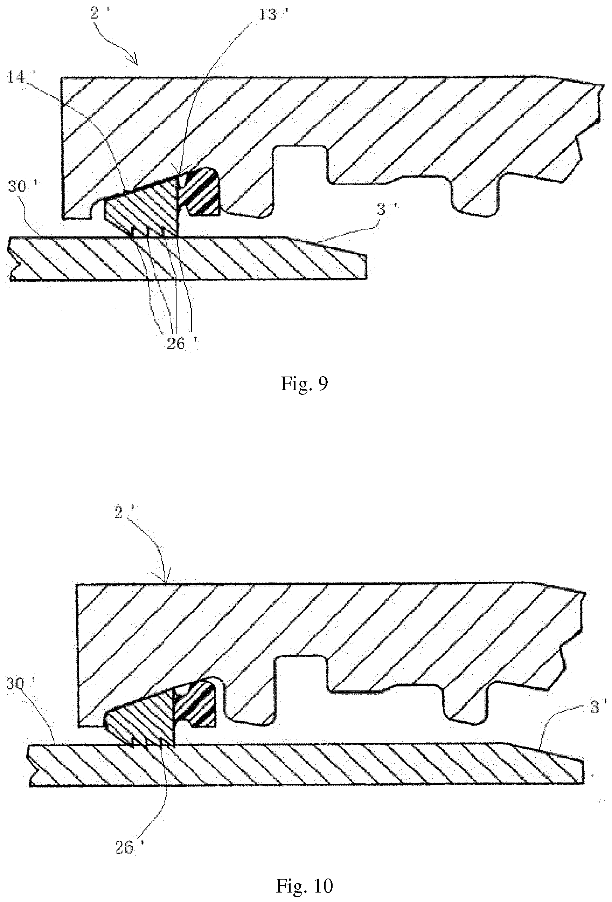

Based on this, there is a structure without a self-anchoring ring in the market, in which the self-anchoring connection is achieved by embedding steel teeth in a sealing rubber ring. The compression mechanism for a pressure pipe connection described in the U.S. Pat. No. 5269569 is shown in Figure 9 and Figure 10. When the spigot 3' inserted into the socket 2' is pulled out, the steel teeth 26' will be embedded in the outer wall of the spigot of the pipe 30'. Therefore, the purpose of restricting the spigot 3' to be pulled out of the socket 2' can be achieved by imbedding force between the pipe 30' and the steel teeth 26'. However, in this kind of the self-anchoring joint, the steel teeth 26' are embedded in the whole annular sealing rubber ring 14', the manufacturing process of the sealing rubber ring 14' is complex, and the hardness is limited by the sealing requirements, so that the self-anchoring performance is generally not ideal, the joint can only be applied in low pressure state and cannot meet the application requirements of medium and high pressure, which increases the risk of the joint leakage when water hammer occurs in the operation pipeline. Moreover, in the actual installation process, the installation personnel is required to insert the whole sealing rubber ring 14' into the corresponding anchoring chamber 13', then it is needed to bend two or three "zigzag" curves to insert smoothly in general. At the same time, the presence of the steel teeth 26' increases the rigidity of the whole sealing rubber ring 14', it is difficult to adjust the position of the steel teeth 26' in the installation process, and it often requires many people to complete the installation. The installation is time-consuming, the process is complex, and it is not easy to ensure the installation quality, which results in labor waste. In addition, because of the annular structure of the sealing rubber ring 14', the volume is larger and it is difficult to place during transportation, which results in increased transportation cost. Furthermore, for the pipes with different diameters, special moulds with corresponding sizes are needed to produce the rubber rings with different diameters, which results in increased production cost, it is more difficult for production organization and the production efficiency is lower.

In addition, in the Chinese patent No. CN101044349Aalso disclosed is a locking ring, which is a deformation of the structure without the self-anchoring ring. In view of the shortcomings of the whole sealing rubber ring, the locking ring is composed of a rigid teeth segment made of hardened metal and a connecting element made of elastic material. However, because it is made by connecting the metal segment with the elastic segment, the size of the metal segment is huge so that it is difficult to process and the manufacture cost will increase. In practice, because of the small size of the elastic component, when the outer diameter of the pipeline is at the lower tolerance limit, the tension provided by the elastic component will be dramatically reduced, and it is difficult to achieve the self-anchoring effect. Moreover, the surface of the pipeline often has a certain radian, and the metal ring cannot be completely attached to the socket, so the steel teeth cannot be ensured to contact with the pipeline, which also easily results in the failure of self-anchoring function.

The document DE19542118 C1 discloses an elastomeric body and a metallic strip comprising anchoring racks vulcanized within the elastomeric body to form a composite anchoring strip that can be bent into a ring shape.

### Summary of the Invention

The technical problem to be solved by the invention is to provide a composite anchoring body which has simple production, convenient use, good anchoring effect, and high pressure bearing capacity and is adapted to pipes with different diameters.

The composite anchoring body of the invention comprises an elastic body and at least one rack. The elastic body is a straight strip-shaped polyhedron with a wide bottom and a narrow top. The bottom, the left end and the right end of the elastic body are all plane, the top is a curve formed by a zigzag connection between planes, and the bottom is isosceles trapezoid. A number of racks are embedded at intervals in the length L direction of the elastic body, the racks comprise saw teeth, and the tooth crest of the saw teeth of the racks is parallel to the long sides of all planes forming the curve. A horizontal face of the elastic body is provided with a plurality of yielding portions uniformly distributed in the length L direction, and one rack is adjacent to at least one of yielding portions in the width W direction of the elastic body.

In the composite anchoring body of the invention, the yielding portion is a groove or a hole extending in the height H direction of the elastic body.

In the composite anchoring body of the invention, the addendum angle α of the saw tooth is 50 degrees to 90 degrees, and Shaw hardness of the elastic body is 40HA to 90HA.

In the composite anchoring body of the invention, the addendum angle α of the saw tooth is 65 degrees to 75 degrees, and Shaw hardness of the elastic body is 55 HA to 70 HA.

In the composite anchoring body of the invention, the addendum angle α of the saw tooth is 70 degrees.

A pipeline connection device using the composite anchoring body is also provided in the invention, which includes a socket and a spigot. The inner wall of one end of the socket is provided with a grooved anchoring chamber and a grooved sealing chamber. A sealing member is provided in the sealing chamber, and an annular anchoring body formed by at least one of the composite anchoring bodies end to end is provide in the anchoring chamber. The saw teeth are located in the radial inner side of the annular anchoring body and the tooth crests of the saw tooth face to the inner side of the socket. The maximum circumference of the anchoring chamber is less than the maximum circumference of the annular anchoring body, the minimum inner diameter R of the annular anchoring body is less than the outer diameter r of the spigot, and the saw teeth are engaged with the outer wall of the spigot.

A method for installing the pipeline connection device is also provided in the invention, which includes the following steps:
A. placing the sealing member in the sealing chamber;
B. forming the annular anchoring body by pressing at least one of the composite anchoring bodies into the anchoring chamber end to end; and
C. gradually inserting the spigot into the socket in the axial direction, and the elastic body and the yielding portion being compressed until the saw teeth are closely engaged with the outer wall of the socket.

Compared with the prior art, the technical solutions of the present invention have at least the following beneficial effects:
1. Compared with the traditional self-anchoring structure which is the whole ring or the segmented ring made of steel, the composite anchoring body in the application is straight strip-shaped in production, the production mould is simpler, the manufacturing of the mould is more convenient, the efficiency of the mould production or the shaping production is greatly improved, the production cost is greatly reduced, and even the spigot-socket-pipes with different diameters can be made by the same mould, just slightly adjusting the length of the composite anchoring body or increasing the number of the composite anchoring body pressed into the anchoring chamber, which can greatly improve the production efficiency. At the same time, the straight strip-shaped composite anchoring body occupies less space than the traditional annular anchoring body, and the transportation is more convenient.
2. The composite anchoring body is composed of the rack and the elastic body, and the compression force of the elastic body is used to ensure that the saw teeth of the rack are anchored to the outer wall of the spigot, the structure of the anchoring body is greatly simplified, the stability is improved, and the problem of insufficient tension provided by the elastic element is avoided.
3. For the anchoring member without the yielding portion, when the design clearance of the spigot-socket-pipe joint is in the maximum and the minimum respectively, the compression force generated by the compression of the elastic body differs greatly; especially the installation resistance is very large when the design clearance is the smallest. In the invention, the yielding portion is provided in the elastic body near the rack, which effectively reduces the installation resistance and improves the installation efficiency.
4. The composite anchoring body is directly pressed into the corresponding anchoring chamber when installing to form an annular structure end to end, so that they can be easily and quickly fixed into the socket instead of additional fittings and special installation tools which ensures effective locking of the spigot and the socket. Moreover, due to the matching of the shape of the annular anchoring body and the anchoring chamber, the annular anchoring body only has anchoring function in the anchoring chamber instead of sealing performance and does not interfere with external factors or other chambers of the socket, so the locking performance thereof is more stable and reliable, and it will not be loosened due to external factors.

Other details and characteristics of the composite anchoring body, the pipeline connection device using the anchoring body and the method for installing the same in the invention can be clearly understood by reading the embodiments described in detail in conjunction with the drawings.

### Brief Description of the Drawings

Figure 1 is a three-dimensional schematic of the composite anchoring body of the present invention.
Figure 2 is the top view of Figure 1.
Figure 3 is the right side sectional view of Figure 1.
Figure 4 is the front view of the pipeline connection device of the present invention in use before the spigot is inserted.
Figure 5 is the three-dimensional schematic of the annular anchoring body in Figure 4.
Figure 6 is a partial enlarged view of A in Figure 4.
Figure 7 is the front view of the pipeline connection device of the present invention in anchoring state after the spigot is inserted.
Figure 8 is a partial enlarged view of B in Figure 7.
Figure 9 is a schematic of an existing pressing mechanism for a pressure pipeline connection in unanchored state before the spigot is inserted.
Figure 10 is a schematic of the existing pressing mechanism for the pressure pipeline connection in anchored state after the spigot is inserted.

### Detailed Description of the Invention

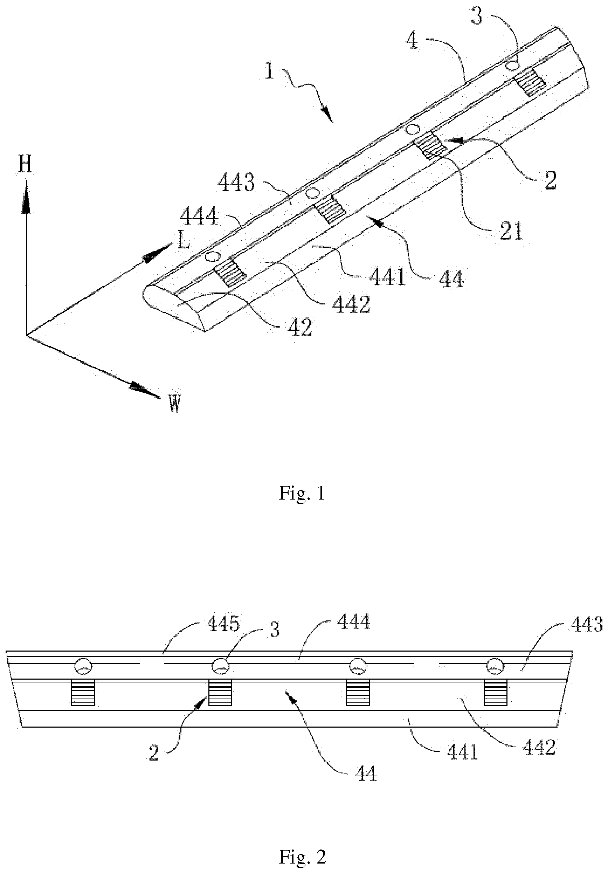

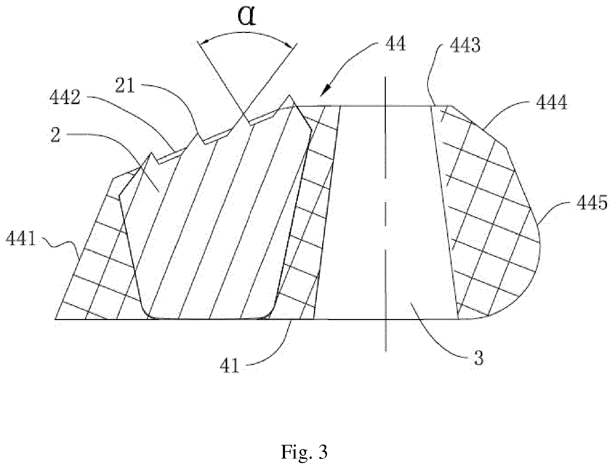

As shown in Figures 1 to 3, the composite anchoring body 1 of the present invention includes an elastic body 4, and the elastic body 4 has Shaw hardness of 40HA to 90HA and preferably 55HA to 70HA so as to achieve proper deformation effect. The elastic body 4 is a straight strip-shaped polyhedron with a wide bottom and a narrow top. The bottom 41, the left end 42 and the right end are all plane, and the top 44 is a curve formed by a zigzag connection between planes. The bottom 41 is isosceles trapezoid, and the top 44 includes a front connecting plane 441 connected with the front edge of the bottom 41, a transition plane 442 connected with the front connecting plane 441, a horizontal plane 443 connected with the transition plane 442, and a transition slope 444 connected with the horizontal plane 443. The transition slope 444 is connected with the back edge of the bottom 41 through an arc 445. A rack 2 is embedded in the elastic body 4 from the transition plane 442. The rack 2 is provided with saw teeth 21, and the tooth crests of the saw teeth 21 are basically parallel to the front and back edges of the transition plane 442. Four racks 2 are embedded at intervals in the length L direction of the elastic body 4. Of course, the number of the rack 2 can be determined by the diameter of the spigot-socket-pipe. When the diameter of the pipe is larger and the elastic body 4 should be longer, the number of the rack 2 should be increased, and vice versa, the number of the rack 2 should be reduced. Moreover, multiple racks 2 can be uniformly or unevenly distributed in the length L direction of the elastic body 4. At the same time, in the length L direction, multiple racks 2 can be arranged in a straight line along the long axis (length L direction) of the elastic body 4 or staggered along the long axis. To ensure the anchoring effect, the rack 2 is made of hard material, such as metal, alloy, ceramics or other materials with similar hardness. The rack 2 in this example is made of steel. The addendum angle α of the saw tooth 21 is 50 degree to 90 degree , preferably 65 degree to 75 degree and 70 degree in this example. In order to ensure the engagement effect with the spigot, three rows of the saw tooth 21 are arranged in the width W direction of the composite anchoring body 1. The row number of the saw tooth 21 can also be increased appropriately according to anchoring requirements, which are not listed here. The horizontal plane 443 of the elastic body 4 is provided with four yielding portions uniformly distributed in the length L direction. In the width W direction of the elastic body 4, one rack 2 is adjacent to one yielding portion 3. If necessary, two or more yielding portions can be provided near the rack 2. The yielding portion 3 is a hole extending in the height H direction of the elastic body 4. The hole can also be deformed into a groove extending in the height H direction of the elastic body 4. The yielding portion 3 of the invention has simple structure and convenient processing. In the insertion of the socket, the rack 2 moves in width W direction of the elastic body 4, and the yielding portion 3 can be compressed. Thus compression force provided by elastic body 4 at the rear of the rack 2 will be more stable and the compression force on the rack 2 will not be suddenly changed with the change of the design clearance of the spigot-socket-pipe in tolerance range, which solves the problem of installation when the design clearance of a general self-anchoring joint is at the lower tolerance limit.

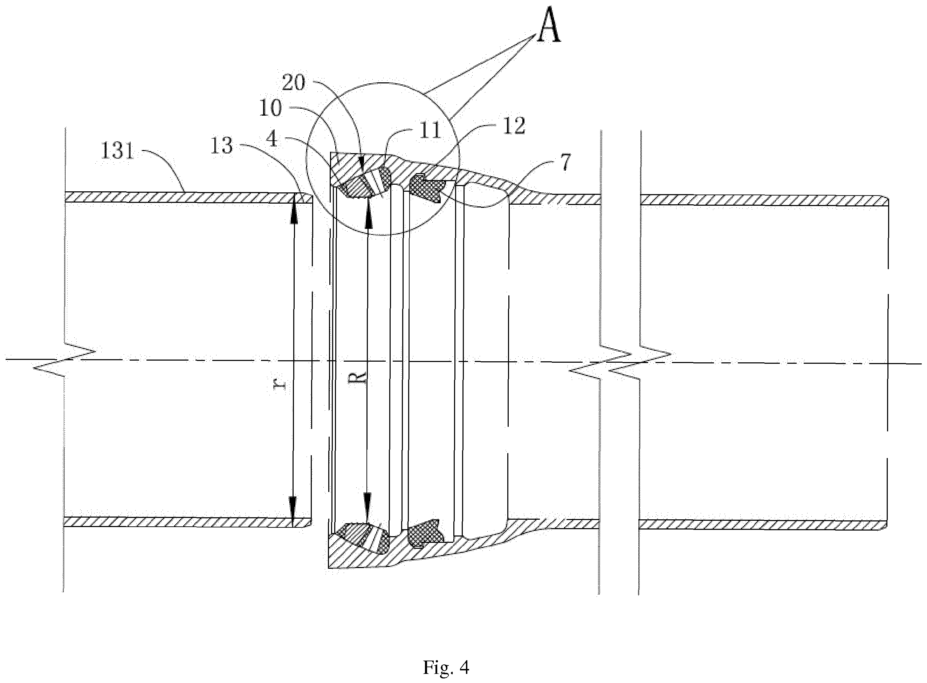

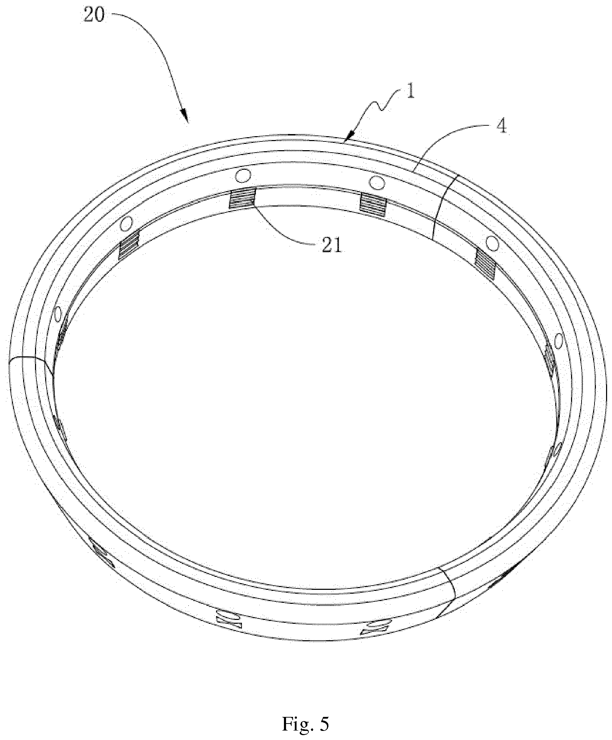

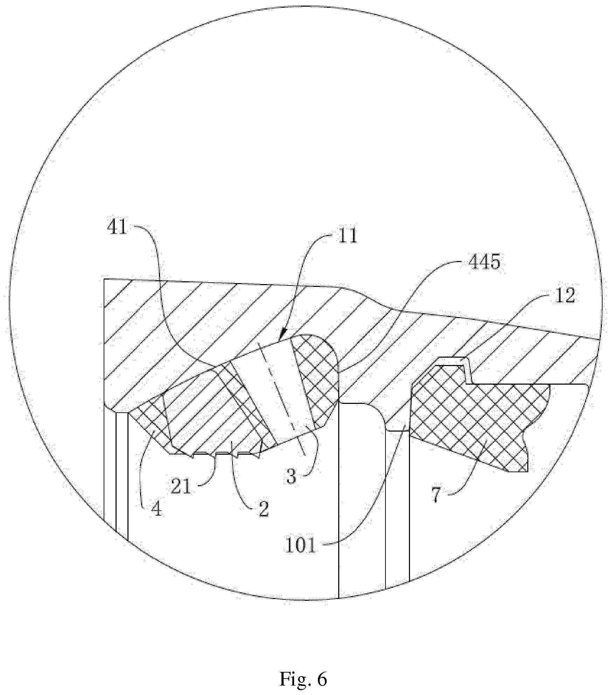

As shown in Figures 4 and 6, in the pipeline connection device (i.e. a self-anchoring joint) using the composite anchoring body 1, the inner wall of the left end of the socket 10 is provided with an anchoring chamber 11 and a sealing chamber 12 which are both grooved. The inner wall extends radially and inward along the socket 10 to form an annular partition shoulder 101. The annular partition shoulder 101 is located between the anchoring chamber 11 and the sealing chamber 12, and the sealing chamber 12 is provided with a sealing member 7. As shown in Figure 5, three composite anchoring bodies 1 as shown in Figure 1 are connected end to end to form an annular anchoring body 20. Specifically, three elastic bodies 4 are bended and then the adjacent left and right ends are connected to form a ring. Saw teeth 21 are located in the radial inner side of the annular anchoring body 20. Certainly, the annular anchoring body can also be formed from one composite anchoring body with longer length, that is, the left and right ends of the elastic body of the composite anchoring body are connected. The maximum circumference of the above-mentioned anchoring chamber 11 is less than that of the annular anchoring body 20 and the annular anchoring body 20 can be placed in the anchoring chamber 11 by compressing, deforming and bending, so as to prevent the annular anchoring body 20 from falling out of the anchoring chamber 11. The shape of the annular anchoring body 20 matches with that of the anchoring chamber 11. Specifically, the elastic body 4 has the wide bottom and the narrow top, the wider bottom 41 and the arc 445 connected with the bottom 41 are all engaged with the inner wall of the anchoring chamber 11, which ensures the installation accuracy. If the bottom of the elastic body 4 has same width as the top, the compression ratio at the bottom is much smaller than the compression ratio at the top after installation, and the annular anchoring body 20 is unstable after installation. To avoid this problem, the elastic body 4 of the present invention has the design of the wide bottom and the narrow top, so that the compression state at the top and the bottom of elastic body 4 will be more reasonable, and the left and right ends of two adjacent elastic bodies 4 can be connected better, which is advantageous to form the annular anchoring body 20 with stable structure. In order to generate enough compressive force on the elastic body 4 when the spigot 13 is inserted, the minimum inner diameter R of the annular anchoring body 20 is smaller than the outer diameter r of the spigot 13. The tooth tips of the saw tooth 21 face to the inner side of the socket 10 so that the saw teeth 21 can firmly engaged with the outer wall 131 of the spigot 13 after the spigot 13 is inserted into the socket 10. After the sawteeth 21 are engaged with the outer wall 131, the spigot 13 can drive the annular anchoring body 20 rotate in circumferential direction of the socket 10 in the anchoring chamber 11 when rotating. In the connection device of the invention, the saw tooth 21 acts as an anchoring joint, and the presence of the yielding portion 3 can ensure that the elastic body 4 can be fully compressed during installation to provide sufficient yielding space for the metal rack 2.

A method for installing the pipeline connection device includes the following steps:
A. placing the seal member 7 in the sealing chamber 12;
B. forming the annular anchoring body 20 by pressing three composite anchoring bodies 1 into the anchoring chamber 11 end to end;
C. gradually inserting the spigot 13 into the socket 10 in the axial direction, and the elastic body 4 and the yielding portion 3 being compressed, and the saw teeth 21 are closely engaged with the outer wall 131.

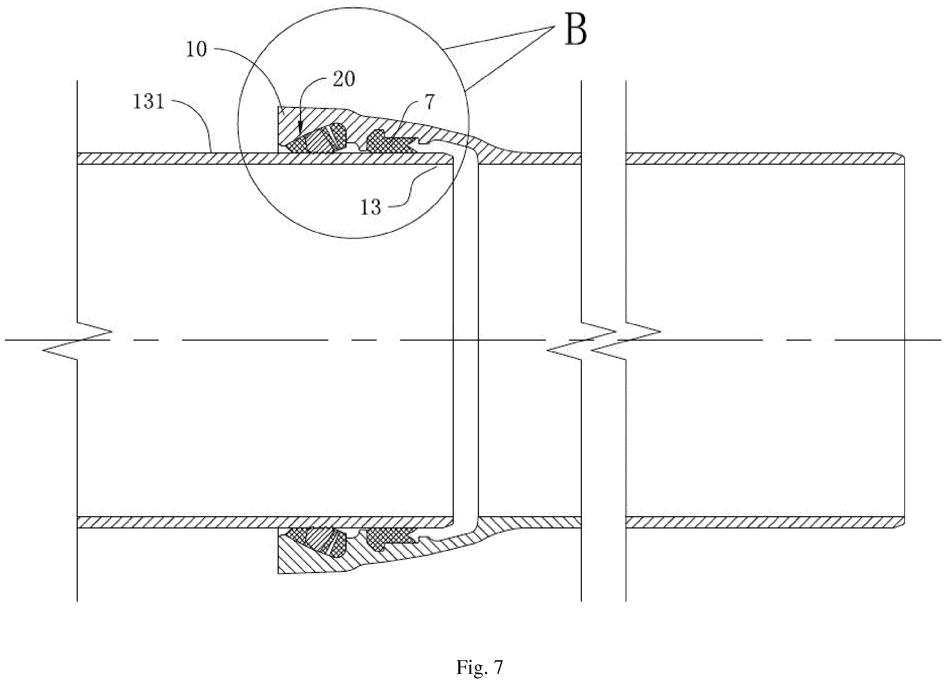

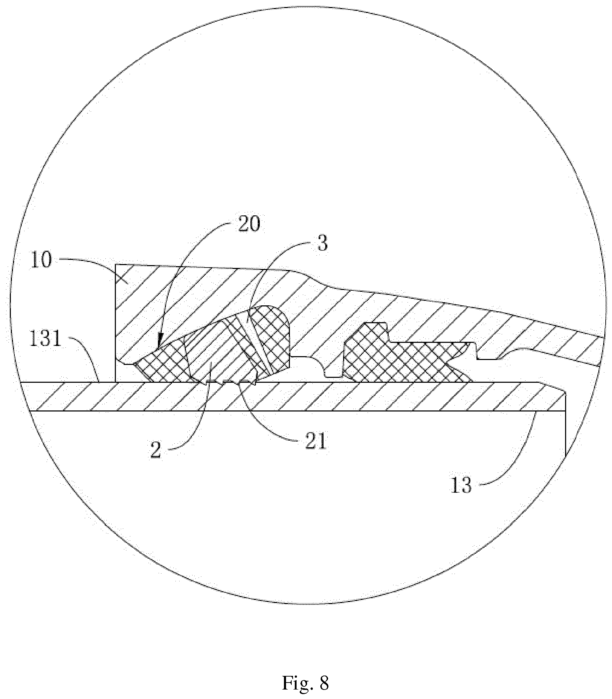

As shown in Figures 7 and 8, the spigot 13 is inserted into the socket 10 in which have been provided the annular anchoring body 20 and the seal member 7, the yielding portion 3 is compressed, so the saw teeth 21 of the rack 2 will be engaged with the outer wall 131. When the spigot 13 is pulled out of the socket 10, the saw teeth 21 will still be engaged with the outer wall 131 because the tooth tips of the saw tooth 21 are inclined to the inner side of the socket 10, thus preventing the spigot 13 from pulling out and achieving the purpose of self-anchoring of the joint. It can be seen that the pipeline connection device of the present invention has no need of the self-anchoring ring, fast installation and strong adaptability.

The above-mentioned embodiments are merely the description of the preferred embodiments of the invention, and are not intended to limit the scope of the invention. Without departing from the invention, various modifications and improvements made by those skilled in the art shall fall within the scope of the invention as defined by the claims.

### Practical Applicability

The composite anchoring body and the pipeline connection device in the invention have the advantages of simple manufacture, convenient use, and good anchoring effect and are adapted to pipes with different diameters. The method for installing the pipeline connection device is simple to operate and high efficient.

## Claims

1. A composite anchoring body (1) including an elastic body (4) and at least one rack (2), in which the elastic body (4) is a straight strip polyhedron with a wide bottom and a narrow top, the bottom (41), the left end (42) and right end are all plane, and the top (44) is a curve formed by a zigzag connection between planes, the bottom (41) is isosceles trapezoid, a number of racks (2) are embedded at intervals in the length L direction of the elastic body (4), the racks (2) comprise saw teeth (21), the tooth crest of the saw teeth (21) of the racks (2) is parallel to the long sides of all planes forming the curve, a horizontal plane (443) of the elastic body (4) is provided with a plurality of yielding portions (3) uniformly distributed in the length L direction, and one rack (2) is adjacent to at least one of yielding portions (3) in the width W direction of the elastic body (4).

2. The composite anchoring body (1) according to claim 1, wherein the yielding portion (3) is a groove or a hole extending in the height H direction of the elastic body (4).

3. The composite anchoring body (1) according to claim 2, wherein the addendum angle α of the saw tooth (21) is 50 degrees to 90 degrees, and Shaw hardness of the elastic body (4) is 40 HA to 90 HA.

4. The composite anchoring body (1) according to claim 3, wherein the addendum angle α of the saw tooth (21) is 65 degrees to 75 degrees, and Shaw hardness of the elastic body (4) is 55 HA to 70 HA.

5. The composite anchoring body (1) according to claim 4, wherein that the addendum angle α of the saw tooth (21) is 70 degrees.

6. A pipeline connection device using the composite anchoring body (1) according to any of claims 1 to 5, including a socket (10) and a spigot (13), the inner wall of one end of the socket (10) is provided with a grooved anchoring chamber (11) and a grooved sealing chamber (12), a sealing member (7) is provided in the sealing chamber (12), in which an annular anchoring body (20) formed by at least one of the composite anchoring bodies (1) end to end is provided in the anchoring chamber (11), the saw teeth (21) are located in the radial inner side of the annular anchoring body (20), the tooth crests of the of the saw tooth (21) face to the inner side of the socket (10), the maximum circumference of the anchoring chamber (11) is less than the maximum circumference of the annular anchoring body (20), the minimum inner diameter R of the annular anchoring body (20) is smaller than the outer diameter r of the spigot (13), and the saw teeth (21) are engaged with the outer wall (131) of the spigot (13).

7. A method for installing the pipeline connection device according to claim 6, which includes the following steps:
A. placing the sealing member (7) in the sealing chamber (12);
B. forming the annular anchoring body by pressing at least one of the composite anchoring bodies (1) into the anchoring chamber (11) end to end; and
C. gradually inserting the spigot (13) into the socket (10) in the axial direction, and the elastic body (4) and the yielding portion (3) being compressed until the saw teeth (21) are closely engaged with the outer wall (131) of the spigot (13).

## Patentansprüche

1. Ein zusammengesetzter Verankerungskörper (1), der einen elastischen Körper (4) und zumindest eine Zahnstange (2) aufweist, wobei der elastische Körper (4) ein gerades Streifen-Polyeder mit einem breiter Unterseite und einer schmalen Oberseite ist, wobei sowohl die Unterseite (41) als auch das linke Ende (42) als auch das rechte Ende eben sind und die Oberseite (44) eine Krümmung, die durch eine Zickzackverbindung zwischen Ebenen ausgebildet ist, ist, wobei die Unterseite (41) ein gleichschenkliges Trapez ist, wobei eine Anzahl von Zahnstangen (2) in Abständen in der Längs-L-Richtung des elastischen Körpers (4) eingebettet ist, wobei die Zahnstangen (2) Sägezähne (21) aufweisen, wobei der Zahnkopf der Sägezähne (21) der Zahnstangen (2) parallel zu den langen Seiten aller Ebenen, die die Krümmung ausbilden, ist, wobei eine Horizontalebene (443) des elastischen Körpers (4) mit einer Vielzahl nachgiebiger Abschnitte (3), die in der Längs-L-Richtung gleichmäßig verteilt sind, bereitgestellt wird und wobei eine Zahnstange (2) benachbart zu zumindest einem der nachgiebigen Abschnitte (3) in der Breiten-W-Richtung des elastischen Körpers (4) ist.

2. Der zusammengesetzte Verankerungskörper (1) nach Anspruch 1, wobei der nachgiebige Abschnitt (3) eine Nut oder ein Loch, die/das sich in die Höhen-H-Richtung des elastischen Körpers (4) erstreckt, ist.

3. Der zusammengesetzte Verankerungskörper (1) nach Anspruch 2, wobei der Kopfwinkel α des Sägezahns (21) 50 Grad bis 90 Grad beträgt und die Shaw-Härte des elastischen Körpers (4) 40 HA bis 90 HA beträgt.

4. Der zusammengesetzte Verankerungskörper (1) nach Anspruch 3, wobei der Kopfwinkel α des Sägezahns (21) 65 Grad bis 75 Grad beträgt und die Shaw-Härte des elastischen Körpers (4) 55 HA bis 70 HA beträgt.

5. Der zusammengesetzte Verankerungskörper (1) nach Anspruch 4, wobei der Kopfwinkel α des Sägezahns (21) 70 Grad beträgt.

6. Eine Rohrleitungsverbindungsvorrichtung mit Verwendung des zusammengesetzten Verankerungskörpers (1) nach einem der Ansprüche 1 bis 5, aufweisend eine Muffe (10) und einen Zapfen (13), wobei die Innenwand eines Endes der Muffe (10) mit einer genuteten Verankerungskammer (11) und einer genuteten Dichtungskammer (12) bereitgestellt wird, wobei ein Dichtungselement (7) in der Dichtungskammer (12) bereitgestellt wird, wobei ein ringförmiger Verankerungskörper (20), der von zumindest einem der zusammengesetzten Verankerungskörper (1) mit den Enden aneinander ausgebildet ist, in der Verankerungskammer (11) bereitgestellt wird, wobei die Sägezähne (21) in der radialen Innenseite des ringförmigen Verankerungskörpers (20) angeordnet sind, wobei die Zahnköpfe des Sägezahns (21) der Innenseite der Muffe (10) zugewandt sind, wobei der größte Umfang der Verankerungskammer (11) kleiner als der größte Umfang des ringförmigen Verankerungskörpers (20) ist, wobei der kleinste Innendurchmesser R des ringförmigen Verankerungskörpers (20) kleiner als der Außendurchmesser r des Zapfens (13) ist, und wobei die Sägezähne (21) mit der Außenwand (131) des Zapfens (13) in Eingriff stehen.

7. Ein Verfahren zur Installation der Rohrleitungsverbindungsvorrichtung nach Anspruch 6, das die folgenden Schritte aufweist:
A. Positionieren des Dichtungselements (7) in der Dichtungskammer (12);
B. Ausbilden des ringförmigen Verankerungskörpers durch Drücken zumindest eines der zusammengesetzten Verankerungskörper (1) in die Verankerungskammer (11) mit den Enden aneinander; und
C. graduelles Einsetzen des Zapfens (13) in die Muffe (10) in Achsrichtung, und wobei der elastische Körper (4) und der nachgiebige Abschnitt (3) zusammengedrückt werden, bis die Sägezähne (21) eng mit der Außenwand (131) des Zapfens (13) in Eingriff stehen.

## Revendications

1. Un corps d'ancrage composite (1) comprenant un corps élastique (4) et au moins une crémaillère (2), le corps élastique (4) étant un polyèdre en forme de bande droite à partie inférieure large et à partie supérieure étroite, la partie inférieure (41), l'extrémité gauche (42) et l'extrémité droite étant toutes plates, et la partie supérieure (44) étant une courbure formée par une liaison en zigzag entre des plans, la partie inférieure (41) étant un trapèze isocèle, un nombre de crémaillères (2) étant encastrées, à intervalles, dans la direction L longitudinale du corps élastique (4), les crémaillères (2) comprenant des dents de scie (21), le sommet de dent des dents de scie (21) des crémaillères (2) étant parallèle aux côtés longs de tous les plans formant la courbure, un plan horizontal (443) du corps élastique (4) étant muni d'une pluralité de parties souples (3) réparties uniformément dans la direction L longitudinale, et une crémaillère (2) étant adjacente à au moins l'une des parties souples (3) dans la direction W de la largeur du corps élastique (4).

2. Le corps d'ancrage composite (1) selon la revendication 1, dans lequel la partie souple (3) est une rainure ou un trou s'étendant dans la direction H de la hauteur du corps élastique (4).

3. Le corps d'ancrage composite (1) selon la revendication 2, dans lequel l'angle de tête α de la dent de scie (21) est compris entre 50 degrés et 90 degrés, et la dureté Shaw du corps élastique (4) est comprise entre 40 HA et 90 HA.

4. Le corps d'ancrage composite (1) selon la revendication 3, dans lequel l'angle de tête α de la dent de scie (21) est compris entre 65 degrés et 75 degrés, et la dureté Shaw du corps élastique (4) est comprise entre 55 HA et 70 HA.

5. Le corps d'ancrage composite (1) selon la revendication 4, dans lequel l'angle de tête α de la dent de scie (21) est de 70 degrés.

6. Un dispositif de raccordement de conduite utilisant le corps d'ancrage composite (1) selon l'une quelconque des revendications 1 à 5, comprenant une douille (10) et un tourillon (13), la paroi intérieure d'une extrémité de la douille (10) étant munie d'une chambre d'ancrage (11) rainurée et d'une chambre d'étanchéité (12) rainurée, un élément d'étanchéité (7) étant prévu dans la chambre d'étanchéité (12), un corps d'ancrage annulaire (20) formé de bout en bout par au moins l'un des corps d'ancrage composites (1) étant prévu dans la chambre d'ancrage (11), les dents de scie (21) étant situées dans le côté intérieur radial du corps d'ancrage annulaire (20), les sommets de dent de la dent de scie (21) faisant face au côté intérieur de la douille (10), la circonférence maximale de la chambre d'ancrage (11) étant inférieure à la circonférence maximale du corps d'ancrage annulaire (20), le diamètre intérieur R minimal du corps d'ancrage annulaire (20) étant inférieur au diamètre extérieur r du tourillon (13), et les dents de scie (21) étant en prise avec la paroi extérieure (131) du tourillon (13).

7. Un procédé d'installation du dispositif de raccordement de conduite selon la revendication 6 qui comprend les étapes suivantes :
A. placer l'élément d'étanchéité (7) dans la chambre d'étanchéité (12) ;
B. former le corps d'ancrage annulaire en pressant de bout en bout au moins l'un des corps d'ancrage composites (1) dans la chambre d'ancrage (11); et
C insérer graduellement le tourillon (13) dans la douille (10) dans la direction axiale, et le corps élastique (4) et la partie souple (3) étant comprimés jusqu'à ce que les dents de scie (21) soient étroitement en prise avec la paroi extérieure (13) du tourillon (13).
